# EUROPÄISCHE PATENTSCHRIFT

(11) **EP 3 581 881 B1**
(45) Veröffentlichungstag und Bekanntmachung des Hinweises auf die Patenterteilung: **19.03.2025**
(21) Anmeldenummer: 18178026.3
(22) Anmeldetag: 15.06.2018
(51) Int. Cl.: G01B 11/06, G01B 11/24, G01B 11/25, G01N 21/64

(54) **OBERFLÄCHENVERMESSUNG MITTELS ANGEREGTER FLUORESZENZ**
SURFACE MEASUREMENT BY MEANS OF EXCITED FLUORESCENCE
MESURE DE SURFACE AU MOYEN DE LA FLUORESCENCE EXCITÉE

(43) Veröffentlichungstag der Anmeldung: 18.12.2019
(73) Patentinhaber: Hexagon Technology Center GmbH, 9435 Heerbrugg (CH)
(72) Erfinder: JENSEN, Thomas, CH-9400 Rorschach (CH); YANG, Zheng, D-88046 Friedrichshafen (DE); STIGWALL, Johan, CH-9008 St. Gallen (CH)
(74) Vertreter: Kaminski Harmann

(56) Entgegenhaltungen:
- WO-A1-2016/127173
- DE-A1- 102016 105 426
- US-A1- 2013 120 712
- RINDRA RANTOSON: "Optimization of transparent objects digitization from visible fluorescence ultraviolet induced", OPTICAL ENGINEERING, vol. 51, no. 3, 1 March 2012 (2012-03-01), BELLINGHAM, pages 033601, XP055681134, ISSN: 0091-3286, DOI: 10.1117/1.OE.51.3.033601

## Beschreibung

Die Erfindung betrifft ein Messgerät und ein Verfahren zur Vermessung von Objektoberflächen basierend auf einer hybriden Messtechnik unter Ausnutzung eines Fluoreszenzeffekts.

In vielen technischen Anwendungsbereichen besteht das Bedürfnis, Objekte mit hoher Genauigkeit oder bezüglich deren Zusammensetzung zu vermessen. Dieses gilt insbesondere für die fertigende Industrie, für die das Vermessen und Überprüfen von Oberflächen von Werkstücken hohe Bedeutung, insbesondere auch zu Zwecken der Qualitätskontrolle, hat.

Für solche Anwendungen werden beispielsweise Koordinatenmessmaschinen eingesetzt, welche eine präzise Vermessung der Geometrie einer Objektoberfläche, typischerweise mit Mikrometer-Genauigkeit, ermöglichen. Zu vermessende Objekte können beispielsweise Motorblöcke, Getriebe und Werkzeuge sein. Bekannte Koordinatenmessmaschinen vermessen die Oberfläche, indem ein mechanischer Kontakt hergestellt und die Oberfläche abgetastet wird. Beispiele hierfür sind Portalmessmaschinen, wie sie z.B. in der DE 43 25 337 oder DE 43 25 347 beschrieben werden. Ein anderes System beruht auf der Verwendung eines Gelenkarms, dessen am Ende des mehrteiligen Arms angeordneter Messsensor entlang der Oberfläche bewegt werden kann. Gattungsgemässe Gelenkarme werden beispielsweise in der US 5,402,582 oder der EP 1 474 650 beschrieben.

Die koordinative Oberflächenvermessung erlaubt das Feststellen von geometrischen Abweichungen am Werkstück von entsprechenden Sollwerten. Diesbezüglich kann damit eine hochgenaue Angabe zur Fertigungspräzision gemacht werden. Es kann also festgestellt werden ob Form und Dimensionierung des produzierten Teils innerhalb einer vorgegebenen Toleranz liegen und das Bauteil als Ausschuss oder Gutteil anzusehen ist.

Im Stand der Technik wird mit solchen Koordinatenmessgeräten als Standardmesssensor beispielsweise ein taktiler Sensor verwendet, welcher aus einer Rubinkugel besteht, die auf einem Messstab montiert ist. Die Auslenkung des taktilen Sensors, im Falle einer für dreidimensionale Messungen ausgelegten Koordinatenmessmaschine in drei zueinander senkrechten Richtungen X, Y und Z, wird bei der Abtastung über ein Schaltelement oder wegmessendes Element bestimmt. Anhand des Schaltpunkts oder Auslenkungswegs werden der Ort des Kontakts und damit die Oberflächenkoordinaten berechnet.

Ferner sind Ansätze zur berührungslosen Vermessung, insbesondere mit optischen Sensoren, bekannt. Mittels eines solchen optischen Sensors können mit einem ausgesandten Messlichtstrahl, insbesondere Laserstrahl, Oberflächentopografien sehr genau vermessen werden. Die Auflösung für eine Vermessung von Oberflächenprofilen mit optischen Messsensoren kann deutlich höher sein als diejenige mit taktilen Messsensoren. Inzwischen in die Messtechnik mit Koordinatenmessmaschinen eingeführte optische Sensoren beruhen beispielsweise auf einer Einstrahlung von Laserlicht auf eine Objektoberfläche für interferometrische Messungen (EP 2 037 214). Auch Verfahren beruhend auf Weisslicht-Interferometrie (DE 10 2005 061 464) und chromatisch-konfokale Verfahren (FR 273 8343) werden vorgeschlagen.

Die WO 2016/127173 A1 betrifft einen Triangulationssensor mit einer zusätzlichen Gewinnung von Oberflächeninformation mittels Fluoreszenz. Die US 2013/120712 A1 und DE 10 2016 105426 betreffen Laserbearbeitungssysteme die jeweils einen Triangulationssensor zur Vermessung der Oberfläche vorsehen. Rindra Rantoson: "Optimization of transparent objects digitization from visible fluorescence ultraviolet induced", Optical Engineering, 2012, betrifft einen Ansatz zur Oberflächenvermessunug von transparenten Objekten mittels Fluoreszenz.

Ein ebenso effizienter Ansatz für die optische Oberflächenvermessung beruht auf der Verwendung eines optischen Sensors, dessen Messfunktionalität auf dem Prinzip der Triangulation beruht. Hierzu wird Messstrahlung auf das zu vermessende Objekt gerichtet und an diesem Objekt diffus gestreut. Teile des emittierten Messlichts werden mit einem Detektor seitens des Sensors nach entsprechender Reflexion an der Objektoberfläche unter einem bestimmten Winkel erfasst. Ein Sensor des Detektors kann hierfür ein Abbild der durch das Auftreffen der Messstrahlung auf der Objektoberfläche entstehenden Beleuchtung (z.B. als ein Bild) erfassen. Anhand einer Lage der abgebildeten Beleuchtung in dem Bild kann aus der bekannten relativen Anordnung von Strahlemitter und Detektor eine Entfernung berechnet werden.

Die Messstrahlung kann in Form einer Linie emittiert werden und der Bildsensor zur Abbildung der projizierten Linien als Flächensensor ausgebildet sein. Hierdurch kann nicht nur punktuell eine Entfernungsinformation generiert werden, sondern es kann eine Vielzahl von Messwerten erfasst werden.

Ein solcher Triangulationssensor kann ferner als Scanner ausgebildet sein. In dieser Ausführungsvariante kann die Messstrahlung in einer scannenden Bewegung über die zu vermessende Oberfläche geführt werden, sei es als bewegter Punkt oder Linie, während einsprechende Entfernungen aufgrund der dabei entstehenden Reflexionen abgeleitet werden. Die Entfernungsmessdaten (z.B. Z-Koordinaten) werden dann entsprechend der Relativbewegung zur Objektoberfläche jeweiligen lateralen Objektpositionen (X- und Y-Koordinaten) zugeordnet. Als Resultat dieser Messung kann eine Punktwolke erhalten werden, die die vermessene Objektoberfläche bzgl. räumlicher Ausdehnung und Form repräsentieren kann.

Generell besteht ein Vorteil der Verwendung eines Triangulationssensors in der vergleichsweise grossen Messgeschwindigkeit und der gleichzeitigen berührungslosen Messung.

Ein Nachteil des Messprinzips ergibt sich beispielsweise bei dem Erfordernis der Vermessung von nicht oder nur beschränkt diffus reflektierenden Oberflächen. Soll z.B. ein spiegelnder oder transparenter Bereich eines Objekts vermessen werden, kann die hierfür erforderliche Reflexion zumindest eines Teils der Messstrahlung in Richtung des Detektors fehlen, da typischerweise keine diffuse Streuung oder Reflexion an der Oberfläche stattfindet. Eine Messung kann hier beispielsweise nur in einer speziellen Anordnung des Sensors relativ zur Oberfläche gelingen, in welcher dieser typischerweise jedoch nicht vorliegt bzw. geführt wird.

Zudem kann eine diffuse Streuung aufgrund von Oberflächenfehlern wie Kratzer oder Staub dominieren, wodurch die Genauigkeit der Messung stark reduziert werden kann.

Ein weiterer Nachteil folgt entsprechend für die Vermessung eines Objekts, dessen Oberfläche nur in Teilen diffus reflektierend und in anderen Teilen spiegelnd oder transparent ist. Für eine optische Vermessung einer solchen Oberfläche müssen jeweils lokal sehr spezifische Randbedingungen erfüllt werden. Dies ist technisch mit grossem Aufwand verbunden und resultiert in einer entsprechend langen Messzeit.

Obige Limitierungen lassen einen optischen (Triangulations-) Sensor für die Vermessung von zahlreichen Teilen aus dem Bereich des Automobilbaus oder Flugzeugbaus ungeeignet erscheinen.

Es ist daher Aufgabe der vorliegenden Erfindung ein verbessertes Messgerät zur Oberflächenvermessung eines Objekts bereitzustellen, wobei obige Nachteile überwunden oder verringert werden können.

Es ist insbesondere eine Aufgabe der vorliegenden Erfindung ein Messgerät anzugeben, welches eine erhöhte Robustheit und Verlässlichkeit, insbesondere ein breiteres Einsatzgebiet, hinsichtlich einer Oberflächenvermessung bereitstellt.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung beruht auf der Idee neben einer typischen Triangulationsmessung mittels reflektierter Messstrahlung, z.B. Laserstrahlung, den Effekt der Fluoreszenz und von dabei emittierter Fluoreszenzstrahlung zu nutzen, um mittels der Fluoreszenzstrahlung zusätzliche Entfernungsinformation zu erzeugen. Die Fluoreszenzstrahlung wird entsprechend mit einem in bekannter Anordnung zur Strahlquelle befindlichen Detektor (mit z.B. einem CCD oder CMOS) derart erfasst, dass fluoreszenzbasierte Entfernungsmessdaten ebenso nach dem Prinzip der Triangulation ableitbar sind.

Insbesondere kunststoff- oder glasbasierte Materialien absorbieren Licht im UV-Bereich oder im Spektralbereich von violettem oder blauem Licht, wodurch Elektronen im Material kurzzeitig ein höheres Energieniveau einnehmen und wieder in das Ursprungsniveau zurückfallen. Durch die Rückkehr in das tiefere Niveau wird die aufgenommene Energie dann in Form einer spontanen Emission von Fluoreszenzlicht wieder abgegeben. Das Fluoreszenzlicht weist eine grössere Wellenlänge als die zur Anregung verwendete Strahlung auf. Somit kann von transparenten oder spiegelnden Glas- oder Kunststoffflächen stammende Strahlung erzeugt und mittels angepasster Detektion erfasst werden.

So können beispielsweise Oberflächen, die mit einer spiegelnden oder nicht-diffus-reflektierenden Beschichtung versehen sind, einer entsprechenden Vermessung zugänglich werden.

Beispielhaft seien ferner Materialien wie Polymethylmethacrylat (PMMA, Acrylglas) oder Polyethylenterephthalat (PET) sowie glaskeramische Werkstoffe genannt. Deren Absorptionsspektren sind derart ausgeprägt, dass eine verhältnismässig grosse Absorptionsfähigkeit für elektromagnetische Strahlung im UV-, Violett- oder Blau-Spektralbereich gegeben ist und bei Absorption von entsprechender Strahlung Fluoreszenz induziert bzw. angeregt wird. Die Anregung von Fluoreszenz beruht dabei auf der Eigenart der in den Materialen vorliegenden organischen Verbindungen.

Wie bereits angedeutet wird zur Anregung der Fluoreszenz vorzugsweise Strahlung mit einer zentralen Wellenlänge im blauen oder ultravioletten Bereich zwischen ca. 250 nm und 450 nm verwendet.

Generell sind mit einer solchen Ausführungsform solche Materialen vermessbar, die einen ausreichend hohen Absorptionskoeffizienten für die verwendete Messwellenlänge und einen ausreichend hohen Emissionskoeffizienten für die Fluoreszenz aufweisen.

Mit dem erfindungsgemässen Ansatz kann ferner eine Unterscheidung der erfassten Strahlung vorgenommen werden. Dies führt zu einer deutlich zuverlässigeren und genaueren Distanzmessung aufgrund der unterschiedlichen Ursprünge und Eigenschaften der vom Objekt ausgehenden Strahlungen. Das reflektierte Messlicht wird an der Oberfläche reflektiert, wodurch der Bezugspunkt für eine Triangulationsmessung direkt ein Oberflächenpunkt am Objekt ist. Das Fluoreszenzlicht jedoch entsteht zu grössten Anteilen im Inneren des Objektmaterials, wodurch ein Bezugspunkt für Entfernungsmessungen nicht mehr eindeutig der Oberfläche zugeordnet werden kann. Zudem unterscheidet sich ein räumliches Längenprofil der Messstrahlung (z.B. gausssches Profil) zumeist von demjenigen der Fluoreszenzstrahlung (breiteres Profil mit abfallender Intensität bezüglich der Eindringtiefe der Messstrahlung in das Material).

Eine Unterscheidung der erfassten Strahlungen ist für die Ableitung von genauen Entfernungswerten daher vorteilhaft.

Die Erfindung betrifft somit ein hybrides Messgerät für die Vermessung eines Objekts, wobei das Messgerät eine Entfernungsmesseinrichtung aufweist. Die Entfernungsmesseinrichtung verfügt über eine zur Erzeugung einer Messstrahlung mit einem definierten Wellenlängenspektrum eingerichtete Strahlemissionseinheit und einen zur Erfassung der an der Objektoberfläche, insbesondere diffus, reflektierten Messstrahlung eingerichteten Detektor mit mindestens einem ersten Sensor. Die Entfernungsmesseinrichtung ist ferner zur Erzeugung von Entfernungsmessdaten ausgebildet, wobei Reflexionsmessdaten als erste Entfernungsmessdaten mittels Emission der Messstrahlung und Erfassung der reflektierten Messstrahlung nach dem Prinzip der Triangulation erzeugbar sind.

Die Messstrahlung ist mit einem derartigen Wellenlängenspektrum erzeugbar, dass durch eine Wechselwirkung der Messstrahlung mit dem Objektmaterial eine Fluoreszenz erzeugbar und Fluoreszenzlicht emittierbar ist. Die Anregbarkeit der Fluoreszenz hängt generell auch davon ab, welches Material das Objekt aufweist. Zur Erzeugung einer Fluoreszenz ist damit insbesondere eine Abstimmung der Wellenlänge der einstrahlenden Messstrahlung auf das Objektmaterial angezeigt. Vorzugsweise ist zumindest teilweise bekannt, aus welchen Materialien das zu messende Objekt gefertigt oder aufgebaut ist und die verwendete Messstrahlung wird entsprechend gewählt. Ein Spektrum des Fluoreszenzlichts und das Wellenlängenspektrum der Messstrahlung sind vorzugsweise unterschiedlich.

Der Detektor ist zudem zur Erfassung des Fluoreszenzlichts, also sensitiv für Licht der Fluoreszenzwellenlänge, ausgebildet. Damit sind Fluoreszenzmessdaten als zweite Entfernungsmessdaten basierend auf der Erfassung des Fluoreszenzlichts (mittels Triangulation) erzeugbar.

Der Sensor kann z.B. als flächiger Bildsensor (CCD oder CMOS) ausgebildet sein. Damit kann bei Projektion der Messstrahlung als Lichtlinie eine Entfernungsinformation nicht nur für einen Messpunkt, sondern für eine Vielzahl von Messpunkten entlang der Linien erzeug werden. Die Information ist aus einer Lage und aus einem Verlauf der mit dem Sensor in einem Bild erfassten, am Objekt reflektierten Messstrahlung als Linie ableitbar.

Der Detektor kann eine optische Baugruppe, insbesondere Objektiv, mit einer oder einer Mehrzahl optischer Komponenten (z.B. Linse, Blende etc.) aufweisen. Der Detektor ist insbesondere als Kamera ausgebildet.

In einer Ausführungsform kann eine Mittenwellenlänge des Wellenlängenspektrums aus einem Bereich zwischen 250 nm und 500 nm gewählt sein, insbesondere 450 nm betragen. Die Wellenlänge der Messstrahlung liegt vorzugsweise im visuell blauen Bereich (um 450 nm). Die Messstrahlung wird dabei z.B. mittels einer Laserdiode erzeugt. Alternativ kann die Wellenlänge dem UV-Bereich zugeordnet sein, also beispielsweise < 400 nm sein. Mit genannten Wellenlängen lässt sich insbesondere eine Fluoreszenz in polymer- oder kunststoffbasierten Materialien aber auch in Gläsern erzeugen.

Der Detektor des Messgeräts kann eine erste optische Filterkomponente aufweisen, wobei die erste optische Filterkomponente in Zusammenwirkung mit dem ersten Sensor eine wellenlängenabhängige Separation von reflektierter Messstrahlung und Fluoreszenzlicht bereitstellt. Das Filter vermag also eine Trennung der beiden vom Objekt ausgehenden Strahlungen zu bewirken. Dies ist insbesondere vorteilhaft, wenn bei Einstrahlung der Messstrahlung sowohl eine diffuse Reflexion der Strahlung als auch eine Fluoreszenz angeregt wird und damit Entfernungsmessdaten mittels beider Ansätze erzeugt werden können. Insbesondere ist die erste optische Filterkomponente als räumlich verteilter Multi-Farbfilter, insbesondere RGB-Filter ausgebildet. Diese kann auch in Form einer RGB-Matrix Bestandteil des Flächensensors sein.

Das Filter kann eine Zusammensetzung aus mehreren räumlich verteilten Pixellevel-Farbfiltern sein, die unterschiedliche Transmissionsspektren haben, oder mit einer Farbkamera mit Bayer Pattern realisiert sein.

In einer Variante kann der Detektor eine zweite optische Filterkomponente aufweisen, wobei die zweite optische Filterkomponente als zweiteiliger Wechselfilter mit einem ersten und einem zweiten Filterbereich ausgebildet ist. Die zweite optische Filterkomponente kann alternativ oder zusätzlich zu der ersten optischen Filterkomponente vorgesehen sein. Der erste Filterbereich stellt eine im Wesentlichen exklusive Durchlässigkeit in Bezug zu dem Wellenlängenspektrum, insbesondere für die Mittenwellenlänge des Wellenlängenspektrums, bereit. Der zweite Filterbereich stellt eine Durchlässigkeit bezüglich eines Spektrums des Fluoreszenzlichts bereit. Der erste und der zweite Filterbereich können abwechselnd, insbesondere sequentiell, in einem Sichtfeld des ersten Sensors positioniert werden. Das in den Detektor einfallende Licht kann somit nach Bedarf derart gefiltert werden, dass entweder Fluoreszenzstrahlung oder nur reflektierte Messstrahlung auf den Sensor trifft. Die Filterkomponente kann manuell bedient werden oder automatisch oder gesteuert positioniert werden.

Die Strahlemissionseinheit kann ferner eine erste und eine zweite Strahlquelle aufweisen und die Messstrahlung kann als eine Komposition, insbesondere Überlagerung, der mit der ersten Strahlquelle erzeugbaren Messstrahlung mit dem definierten Wellenlängenspektrum und einer mit der zweiten Strahlquelle erzeugbaren weiteren Messstrahlung mit einem von dem definierten Wellenlängenspektrum unterschiedlichen weiteren Wellenlängenspektrum erzeugbar sein.

Neben der Verwendung zweier Strahlquellen kann eine einzelne Strahlquelle vorgesehen sein, die beispielsweise Messstrahlung mit zwei unterschiedlichen Wellenlängen emittiert.

Hierdurch kann bereits emitterseitig eine Trennung (hinsichtlich der Wellenlänge) von fluoreszenzanregender Strahlung und zu reflektierender Strahlung vorgesehen werden. Der Detektor kann z.B. zur Erfassung von Licht einer Messwellenlänge ausgebildet sein (z.B. mittels eines passenden Filters), wobei für diese Wellenlänge z.B. nicht mit einer Erzeugung von Fluoreszenz, sondern mit einer Reflexion zu rechnen ist. Alternativ kann der Detektor z.B. zur Erfassung einer Fluoreszenz ausgebildet sein.

In diesem Kontext kann die Entfernungsmesseinrichtung zur derartigen Ansteuerung der ersten und der zweiten Strahlquelle ausgebildet sein, dass die Messstrahlung mit dem definierten Wellenlängenspektrum und die Messstrahlung mit dem weiteren Wellenlängenspektrum (Fluoreszenzstrahlung) sequentiell abwechselnd in bestimmten Intervallen emittierbar sind. Die Entfernungsmesseinrichtung kann zudem zur derartigen Ansteuerung des Detektors ausgebildet sein, dass eine erste Erfassung und eine zweite Erfassung sequentiell synchronisiert mit der Ansteuerung der ersten und der zweiten Strahlquelle durchführbar sind. Hierdurch kann der Detektor beispielsweise zur Erfassung beider Strahlungsphänomene (Reflexion und Fluoreszenz) ausgebildet sein, jedoch ein Erfassen mit dem jeweiligen Emittieren so synchronisiert sein, dass mit einer Bilderfassung nur Fluoreszenzlicht oder reflektiertes Licht erfasst wird und eine Unterscheidung der erfassten Strahlungen eindeutig durchführbar ist.

Der Detektor kann einen zweiten Sensor aufweisen und derart eingerichtet sein, dass die reflektierte Messstrahlung mit dem ersten Sensor und das Fluoreszenzlicht mit dem zweiten Sensor erfassbar ist, insbesondere wobei dem ersten und dem zweiten Sensor jeweils eine Filtereinheit zugeordnet sind und die jeweilige Filtereinheit im Wesentlichen ausschliesslich bezüglich der reflektierten Messstrahlung bzw. des Fluoreszenzlichts durchlässig ist.

Der Detektor kann einen dichroitischen bzw. dichromatischen Strahlteiler aufweisen und der Strahlteiler kann zur wellenlängenabhängigen Separation der reflektierten Messstrahlung von dem Fluoreszenzlicht ausgebildet sein.

Generell sind auch andersartige Strahlteiler oder Filter denkbar, die beispielsweisse nach dem Prinzip der Interferenz wirken.

In einer Ausführungsform weist der Sensor einen ersten und einen zweiten, insbesondere räumlich getrennten, Erfassungsbereich auf und der Detektor kann derart eingerichtet sein, dass die reflektierte Messstrahlung durch Wechselwirkung mit dem ersten Erfassungsbereich und das Fluoreszenzlicht durch Wechselwirkung mit dem zweiten Erfassungsbereich erfassbar ist. Die jeweiligen Strahlungskomponenten können hierzu auf die jeweiligen Erfassungsbereiche gelenkt werden.

Erfindungsgemäss kann das Messgerät eine Steuerungs- und Verarbeitungseinheit aufweisen, die insbesondere zur Ausführung eines nachfolgend beschriebenen Verfahrens eingerichtet ist.

Erfindungsgemäss weist die Steuerungs- und Verarbeitungseinheit eine derart konfigurierte Datenfusionsfunktionalität auf, dass bei deren Ausführung die Erfassung der Messstrahlung und des Fluoreszenzlichts fortlaufend überwacht wird, fortlaufend eine jeweilige Intensitätsinformation für die jeweilige Erfassung der Messstrahlung und des Fluoreszenzlichts abgeleitet wird und eine die Objektoberfläche repräsentierende Punktwolke durch selektives Verarbeiten der Reflexionsmessdaten und der Fluoreszenzmessdaten basierend auf der Intensitätsinformation erzeugt wird, insbesondere wobei diejenigen Entfernungsmessdaten für einen jeweiligen Objektpunkt verarbeitet werden, für welche eine grössere Intensität abgeleitet ist.

So kann für jeden erfassten Bereich der Objektoberfläche die Datenbasis verwendet werden, die das genauere und vollständigere Abbild der Oberfläche erwarten lässt.

Die Steuerungs- und Verarbeitungseinheit kann ferner eine derart konfigurierte Umschaltfunktionalität aufweisen, dass bei deren Ausführung die Messstrahlung oder das Fluoreszenzlicht fortlaufend erfasst wird, entsprechende Reflexionsmessdaten bzw. Fluoreszenzmessdaten erzeugt werden, die Erfassung der Messstrahlung bzw. des Fluoreszenzlichts fortlaufend bezüglich einer Signalintensität überwacht wird, die Signalintensität fortlaufend mit einem definierten Schwellwert verglichen wird und ein Umschalten zwischen der Erfassung der Messstrahlung und der Erfassung des Fluoreszenzlichts in Abhängigkeit des Vergleichs erfolgt.

Sollte also festgestellt werden, dass kein Fluoreszenzsignal erfassbar ist, kann ein entsprechendes Umschalten auf Reflexionsmessen erfolgen und umgekehrt.

Die Erfindung betrifft zudem ein hybrides Messverfahren zur Vermessung eines ein bezüglich eines bekannten Wellenlängenbereichs fluoreszierenden Material aufweisenden Objekts. Das Messverfahren umfasst zumindest ein Erzeugen und Emittieren einer Messstrahlung mit einem definierten Wellenlängenspektrum, ein scannendes Beleuchten eines Objektbereichs mit der Messstrahlung, ein Erfassen der an der Objektoberfläche, insbesondere diffus, reflektierten Messstrahlung und ein Erzeugen von Reflexionsmessdaten als erste Entfernungsmessdaten basierend auf dem Erfassen der reflektierten Messstrahlung nach dem Prinzip der Triangulation.

Im Rahmen des Messverfahrens wird die Messstrahlung mit einem derartigen Wellenlängenspektrum erzeugt, dass im Rahmen des scannenden Beleuchtens durch eine Wechselwirkung der Messstrahlung mit dem Objektmaterial eine Fluoreszenz angeregt und objektseitig Fluoreszenzlicht emittiert wird. Das Fluoreszenzlicht wird erfasst und Fluoreszenzmessdaten werden als zweite Entfernungsmessdaten basierend auf der Erfassung des Fluoreszenzlichts nach dem Prinzip der Triangulation erzeugt.

In einer Ausführungsform kann basierend auf den Reflexionsmessdaten eine Reflexionspunktwolke erzeugt werden und basierend auf den Fluoreszenzmessdaten eine Fluoreszenzpunktwolke erzeugt werden. Eine Repräsentation der Objektoberfläche kann dann durch eine Kombination der Reflexionspunktwolke und der Fluoreszenzpunktwolke erzeugt werden. Es ist also eine Datenfusion durchführbar, wobei im Resultat die Oberfläche eines teilweise transparenten Objekts vollständig durch die optische, kontaktlose Messung abgebildet werden kann.

Insbesondere können die Reflexionsmessdaten und die Fluoreszenzmessdaten hinsichtlich deren jeweiliger Ausprägung, Qualität oder Dichte bezüglich der Erfassung des Objektbereichs ortsabhängig analysiert werden, wobei eine Segmentierung des Objektbereichs basierend auf der Analyse erfolgen kann. Eine Kombination von zumindest einem Teil der Reflexionsmessdaten und von zumindest einem Teil der Fluoreszenzmessdaten kann dann basierend auf der Segmentierung erfolgen.

Die Erfindung betrifft ferner ein Computerprogrammprodukt, das auf einem maschinenlesbaren Träger gespeichert ist oder verkörpert ist durch eine elektromagnetische Welle, zur Steuerung bzw. Ausführung zumindest der Schritte des Erfassens der reflektierten Messstrahlung, des Erzeugens von Reflexionsmessdaten, des Erfassens des Fluoreszenzlichts und des Erzeugens von Fluoreszenzmessdaten eines obigen Messverfahrens. Das Computerprogrammprodukt kann insbesondere auf einer Steuerungs- und Verarbeitungseinheit eines hybriden Messgeräts ausgeführt werden.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine Ausführungsform eines erfindungsgemässen Messgeräts zur Vermessung eines Objekts;
- Fig. 2: eine weitere Ausführungsform eines erfindungsgemässen Messgeräts zur Vermessung eines Objekts;
- Fig. 3: eine weitere Ausführungsform eines erfindungsgemässen Messgeräts zur Vermessung eines Objekts;
- Fig. 4: eine weitere Ausführungsform eines erfindungsgemässen Messgeräts zur Vermessung eines Objekts;
- Fig. 5: eine weitere Ausführungsform eines erfindungsgemässen Messgeräts zur Vermessung eines Objekts;
- Fig. 6: eine weitere Ausführungsform eines erfindungsgemässen Messgeräts zur Vermessung eines Objekts;
- Fig. 7: eine Ausführungsform einer erfindungsgemässen Messstrategie mit einem erfindungsgemässen hybriden Triangulationsscanner; und
- Fig.8: ein Modell für eine Intensitätsverteilung bei Fluoreszenz zur Datenauswertung.

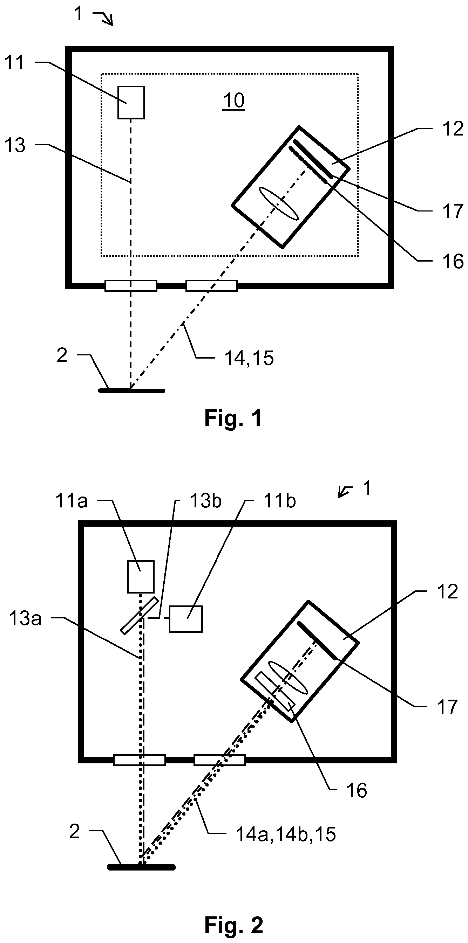

Figur 1 zeigt eine Ausführungsform eines erfindungsgemässen Messgeräts 1 zur Vermessung eines Objekts 2. Das Messgerät 1 weist eine Entfernungsmesseinheit 10 auf, die zur Erzeugung von Messdaten mittels Triangulation ausgebildet ist. Die Entfernungsmesseinheit 10 wiederum weist eine Strahlemissionseinheit 11 und einen Detektor 12 auf. Die Strahlemissionseinheit 11 und der Detektor 12 sind in einer bekannten Position und Orientierung relativ zueinander angeordnet.

Der Strahlemitter 11 ist zur Aussendung von Messstrahlung 13, insbesondere von Laserstrahlung, ausgebildet. Mit der Messstrahlung 13 kann eine spezifische Beleuchtung des Objekts 2 bereitgestellt werden. Beispielsweise kann die Messstrahlung 13 in Form einer Linie erzeugt werden und eine entsprechende Lichtlinie auf das Objekt 2 projiziert werden.

Die Messstrahlung 13 wird hier als blaue Laserstrahlung mit einer Wellenlänge von 450 nm erzeugt.

Das zu vermessende Objekt 2 weist zumindest abschnittsweise Material auf, das zu einer Emission von Fluoreszenzlicht anregbar ist. Das Absorptionsspektrum besagten Objektmaterials ist derart ausgeprägt, dass die Fluoreszenz hier insbesondere mittels Bestrahlung mit elektromagnetischer Strahlung mit einer Wellenlänge aus einem Wellenlängenbereich von 250 nm bis 500 nm, insbesondere 300 nm bis 450 nm, angeregt werden kann. Ein solches Fluoreszenzverhalten trifft auf zahlreiche plastikartige oder kunststoffbasierte Werkstoffe zu. Die Wellenlänge des anregenden Messlichts ist somit vorzugsweise aus dem ultravioletten oder blauen Spektralbereich zu wählen.

Die Messstrahlung 13 trifft auf das Objekt und tritt in Wechselwirkung mit dem Objektmaterial. In Abhängigkeit der jeweiligen Messeigenschaft des aktuell bestrahlten Objektabschnitts, d.h. ob der Objektabschnitt diffus reflektierend ist oder eine Fluoreszenz angeregt wird oder beide Effekte gleichzeitig auftreten, wird ein Teil der Messstrahlung 13 als Reflexionsstrahlung 14 in Richtung des Detektors 12 reflektiert und/oder die Messstrahlung 13 wird (zumindest teilweise) absorbiert und
Fluoreszenzstrahlung 15 wird seitens des Objekts emittiert. Die Fluoreszenzstrahlung 15 ist ebenso mit dem Detektor 2 erfassbar.

Im gezeigten Messbeispiel wird sowohl Messstrahlung diffus reflektiert als auch Fluoreszenz angeregt. Es ist also sowohl reflektierte Messstrahlung 14 als auch Fluoreszenzlicht 15 mit dem Detektor 12 erfassbar. Beide Signale können mittels eines vor den Sensor 17 geschalteten Multi-Farbfilters 16, z.B. RBG-Filter, abgetastet und selektiv erfasst werden. Ein solches Filter 16 stellt eine wellenlängenabhängige Separierung der Signale bereit. Das Fluoreszenzlicht weist im Vergleich zur (reflektierten) Messstrahlung eine grössere Wellenlänge auf.

Die Messanordnung 1 erlaubt hierdurch die Generierung von Entfernungsmessdaten aus sowohl direkt reflektierter Messstrahlung als auch basierend auf emittiertem Fluoreszenzlicht. Fällt die Messstrahlung z.B. als Linie auf das Objekt 2, so kann seitens des Detektors 2 eine Linie an der Objektoberfläche 2 in einem der emittierten Messstrahlung 13 entsprechenden Wellenlängenspektrum erfasst werden und eine (angeregte) Linie mit einem unterschiedlichen Wellenlängenspektrum erfasst werden. Anhand der unterschiedlichen spektralen Charakteristika lassen sich jeweilige Abbildungen auf den Sensor 17 den jeweiligen Messprinzipien (Reflexion und Fluoreszenz) zuordnen.

Figur 2 zeigt eine weitere Ausführungsform eines erfindungsgemässen Messgeräts 1 zur Vermessung eines Objekts 2. Das Messgerät 1 weist eine erste Strahlquelle 11a und eine zweite Strahlquelle 11b auf. Die erste Strahlquelle 11a ist zur Emission von fluoreszenzinduzierender Messstrahlung 13a mit einer Wellenlänge im blauen oder ultravioletten Spektralbereich ausgebildet, insbesondere als Laserdiode. Die zweite Strahlquelle 11b ist zur Emission einer zweiten längerwelligeren Messstrahlung 13b, z.B. im roten Spektralbereich, ausgebildet, insbesondre ebenfalls als Laserdiode.

Die Strahlführung für die jeweils emittierten Strahlungen kann derart ausgelegt sein, dass beide Messstrahlungen 13a und 13b koaxial oder parallel bezüglich einer gemeinsamen optischen Achse emittieren. Eine solche Kombination der Strahlen kann z.B. mittels eines teildurchlässigen Umlenkelements (z.B. Stahlteiler) bereitgestellt sein. Beide Strahlenbündel treffen somit z.B. positionsidentisch oder mit definiertem parallelem Versatz auf die Objektoberfläche.

Während die zweite Messstrahlung 13b für eine direkte Triangulationsmessung mittels Strahlreflexion emittierbar ist, ist die erste Messstrahlung 13a zur Induktion möglicher Fluoreszenzeffekte vorgesehen. Im gezeigten Beispiel tritt sowohl direkte Reflexion der zweiten Messstrahlung 13 als auch Induktion von Fluoreszenz auf.

Als von dem Objekt 2 aufgrund der Beleuchtung mit beiden Messstrahlungen 13a und 13b emittierten bzw. reflektierten Strahlungskomponenten ergeben sich somit ein reflektierter Teil der ersten Messstrahlung 14a sowie der zweiten Messstrahlung 14b als auch die durch die Wechselwirkung mit der ersten Messstrahlung 13a entstehende Fluoreszenzstrahlung 15. Diese drei Komponenten strahlen durch ein Sichtfenster in das Messgerät 1 ein und treffen auf den Detektor 12.

Ein Filterelement 16 mit einer Durchlässigkeit für Strahlung entsprechend dem Fluoreszenzspektrum und dem Spektrum der zweiten Messstrahlung ist vorgesehen. Die Wellenlänge der zweiten Messstrahlung ist vorzugsweise so gewählt, dass diese innerhalb des zu erwartenden Fluoreszenzspektrums liegt.

Der Sensor 17 ist zur Erfassung von entsprechender Strahlung ausgebildet.

Die erste und die zweite Strahlquelle 11a und 11b können derart angesteuert werden, dass deren Messstrahlungen 13a und 13b alternierend, sequentiell emittiert werden, d.h. es wird immer nur entweder die erste 13a oder die zweite Messstrahlung 13b emittiert. Der Detektor 12 wiederum kann entsprechend derart angesteuert werden, dass - synchronisiert mit der wechselnden Emission der beiden Messstrahlungen - abwechselnd (sequentiell) zwei Belichtungen des Sensors erfasst werden. So kann eine jeweilige Erfassung einer Sensorbeleuchtung entweder der Reflexionsmessung oder der Fluoreszenzmessung zugeordnet werden.

Die Wellenlänge der zweiten Messstrahlung 13b ist hierbei so, dass bei einer Beleuchtung des Objekts mit dieser Strahlung vorzugsweise keine Fluoreszenz auftritt. Insbesondere wird mit der zweiten Strahlquelle 11b eine rote Laserlinie und mit der ersten Strahlquelle 11a eine blaue Laserlinie erzeugt.

Die Kamera 12 kann also Licht beider Wellenlängen erfassen und damit direkt reflektiertes Licht und Fluoreszenz messbar machen. So können auch Flächen, die keine Fluoreszenz aufweisen, z.B. metallische Oberflächen, gemessen werden. Die Wellenlänge der Strahlquelle 11b liegt vorzugsweise nicht zu nahe an der fluoreszenzanregenden Wellenlänge.

Die zweite Strahlquelle 11b stellt somit insbesondere die Emission eines zweiten Lasers mit einer (bezüglich der ersten Stehlquelle 11a) längere Wellenlänge bereit, damit eine damit erzeugbare Reflexion (ohne Fluoreszenz) mit der gleichen Kamera 12 messbar ist.

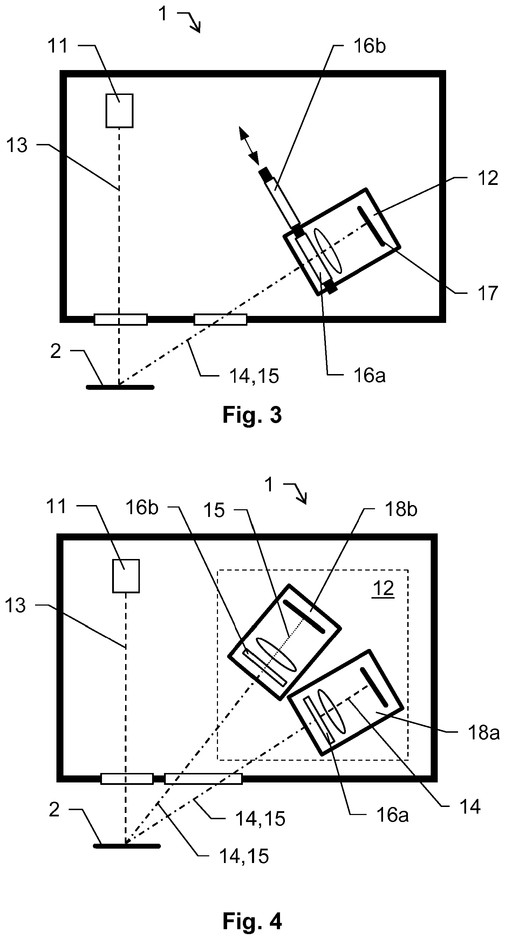

Figur 3 zeigt eine weitere Ausführungsform eines erfindungsgemässen Messgeräts 1 zur Vermessung eines Objekts 2. Die Strahlemissionseinheit 11, die möglichen Wechselwirkungen mit dem Objekt 2 und die Abstrahlung von Messlicht vom Objekt 2 entsprechen im Wesentlichen der Ausführungsform nach Figur 1.

Die Ausführungsform unterscheidet sich hinsichtlich der Detektion der die Objektinformation aufweisenden Messstrahlungen 14 und 15. Der Detektor 12 weist einen einzelnen Sensor 17 auf, der zur Erfassung von Licht mit einem Messstrahlungsspektrum, insbesondere einer zentralen Messstrahlungswellenlänge, und mit einem, insbesondere breitbandigerem, Fluoreszenzspektrum ausgelegt ist.

Zur Trennung der jeweiligen Signale weist der Detektor 12 eine Filtereinheit mit zwei Filterelementen 16a und 16b auf. Die Filterelemente 16a und 16b können abwechselnd in den Strahlengang bzw. in den Verlauf der optischen Achse des Detektors oder Sensors eingebracht werden. Die Wirkung der Elemente 16a und 16b im Detektor kann mehrfach gegenseitig ausgetauscht werden. Dies kann manuell oder gesteuert (automatisch) mittels einer mechanischen Stellvorrichtung erfolgen.

Ein sequentielles Austauschen der Filterelemente kann insbesondere in Abhängigkeit der zu verwendenden Messmethode (Reflexion oder Fluoreszenz) erfolgen.

Beispielsweise kann ein Objekt zunächst in Verwendung des typischen Triangulationsansatzes unter Ausnutzung einer diffusen Reflexion der Messstrahlung am Objekt vermessen werden. Wird im Verlauf der Messung dann festgestellt, dass am Detektor Signale mit geringer, nicht ausreichender Intensität gemessen werden oder ein Intensitätsniveau signifikant (stark und schnell) abfällt kann dies ein Indiz für das Erreichen eines transparenten oder spiegelnden Objektbereichs sein. Ferner kann ein Bediener des Messgeräts z.B. individuell (durch visuelle Begutachtung des Objekts 2) feststellen, dass ein transparenter Bereich zu vermessen ist. In Reaktion einer der obigen Feststellungen kann dann ein Wechsel des bisher verwendeten Filters 16a bzw. 16b initiiert oder durchgeführt werden. Im Anschluss an den Wechsel kann eine entsprechende Messfunktionalität des Geräts ebenso verändert werden, z.B. von Reflexions- hin zu Fluoreszenzmessen.

Eine Unterscheidung der empfangenen Strahlungen, d.h. von Reflexions- und Fluoreszenzstrahlung, ist für die Bestimmung von Entfernungsdaten nach dem Prinzip der Triangulation relevant, da die Reflexionsstrahlung von der Objektoberfläche abgestrahlt wird, die Fluoreszenzstrahlung grossteils jedoch in tiefer gelegenen Materialschichten entsteht und dieser Strahlungsursprung für die Signalauswertung entsprechend zu berücksichtigen ist. Für die Auswertung von Fluoreszenzlicht sind insbesondere spezifische Kalibrationsparameter hinterlegt, die eine exakte Bestimmung der Objektoberfläche auch anhand des Fluoreszenzlichts erlauben.

Zudem ist die Unterscheidung der Signale für die Signalverarbeitung und -auswertung deshalb relevant, da das Spektrum einer reflektierten Messstrahlung, insbesondere bei der Verwendung eines Lasers, ein vergleichsweise wohl definiertes ist, das Spektrum bei der Entstehung von Fluoreszenzlicht jedoch deutlich davon abweicht.

Im Standardbetrieb, d.h. unter Verwendung einer Strahlreflexion, wird typischerweise eine symmetrische, dünne Laserlinie projiziert und ein Bild der Linien nach Reflexion am Objekt seitens des Detektors erfasst. Das Intensitätsprofil bezüglich des Abbilds der Linien ist hier typischerweise ein Gausssches. Die Position des Intensitätsmaximums gibt die relevante Höhenkoordinate am Objekt wieder und kann mittels gaussscher oder parabolischer Näherung bestimmt werden.

Für die Entfernungsbestimmung mittels Fluoreszenzlicht ist eine für das Fluoreszenzspektrum angepasste Auswertung erforderlich. Eine Auswertung anhand einer Bestimmung eines Intensitätsmaximums oder -schwerpunkts - wie dies bei klassischer Reflexion typischerweise erfolgt - kann hierbei zu fehlerbehafteten Ergebnissen führen, da die Intensitätsverteilung von der Eindringtiefe der fluoreszenzanregenden Strahlung und damit vom Entstehungsort der Fluoreszenz abhängt. Der Intensitätsschwerpunkt korreliert damit nicht mit der Objektoberfläche, sondern ist typischerweise einer tiefer gelegenen Materialschicht zuzuordnen.

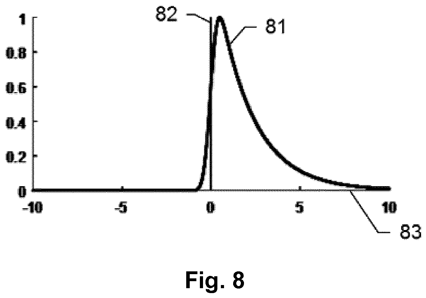

Figur 8 zeigt hierzu beispielhaft eine Intensitätsverteilung 81 einer Fluoreszenz, wie diese bei Vermessung eines fluoreszierend anregbaren Objekts mit einem Sensor 12 des Messgeräts 1 erfasst werden kann. Das emittierte Fluoreszenzlicht wird mit dem Sensor bzw. einem bestimmten Kamerachip gesammelt. Die Intensität ist über die Eindringtiefe 83 (hier: gemessen in mm) der Strahlung in das Objektmaterial aufgetragen. Die Linien 82 markiert die Koordinate der Materialoberfläche. Wie zu erkennen, entspricht die Lage des Intensitätsmaximums bzw. des Intensitätsschwerpunkts nicht einem Punkt an der Objektoberfläche, sondern würde eine Koordinate im Inneren des Objekts angeben. Die Auswertung der mittels Fluoreszenz erfassten Messpunkte wird daher vorzugsweise untere Anwendung dieses oder eines ähnlichen Modells durchgeführt.Figur 4 zeigt eine weitere Ausführungsform eines erfindungsgemässen Messgeräts 1 zur Vermessung eines Objekts 2. Die Ausführungsform unterscheidet sich von derjenigen der Figur 3 allein detektorseitig.

Der Detektor 12 weist zwei Kameras 18a und 18b. Jede der Kameras 18a und 18b wiederum verfügt über je einen Sensor, je eine optische Baugruppe und je ein Filterelement 16a bzw. 16b. Die Filterelemente 16a und 16b unterscheiden sich bezüglich der Durchlässigkeit von elektromagnetischer Strahlung.

Das Filter 16a ist für Licht der Messwellenlänge und damit auch für deren Reflexionen 14 durchlässig. Dieses Filter kann bei der Verwendung einer Laserstrahlquelle entsprechend schmalbandig ausgebildet sein, um mögliche Fremdstrahleinflüsse zu minimieren oder auszuschliessen.

Das Filter 16b ist für eine Durchlässigkeit von erzeugtem Fluoreszenzlicht 15 ausgelegt. Dieses Filter 16b kann insbesondere auf die Vermessung eines Objekts mit einem bestimmten Material abgestimmt sein, d.h. falls die Materialeigenschaften eines Objekts 2 und ein damit verbundenes anregbares Fluoreszenzverhalten bekannt sind, kann das Filter 16b entsprechend passend durchlässig ausgebildet sein. Typischerweise handelt es sich - im Vergleich zu Filter 16a - um einen breitbandigeren Durchlässigkeitsbereich.

Der jeweilige Kamerasensor kann entsprechend auf das Erfassen von Reflexionslicht bzw. Fluoreszenzlicht abgestimmt sein, z.B. in bestimmten Wellenlängenbereich sensitiv sein.

Die Konfiguration stellt somit ein gleichzeitiges Ableiten von Fluoreszenzmessdaten (mittels der Kamera 18b) und Reflexionsmessdaten (mittels der Kamera 18a) bereit.

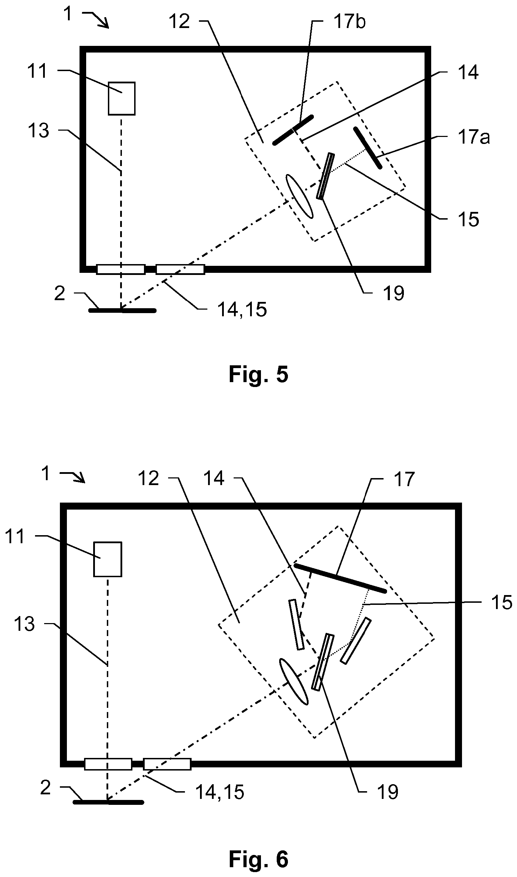

Figur 5 zeigt eine weitere Ausführungsform eines erfindungsgemässen Messgeräts 1 zur Vermessung eines Objekts 2. Die Ausführungsform unterscheidet sich von derjenigen der Figur 4 bezüglich des Aufbaus des Detektors 12.

Der Detektor 12 weist zwei Sensoren 17a und 17b auf. Ferner verfügt der Detektor 12 über einen, insbesondere dichromatischen bzw. dichroitischen, Strahlteiler 19. Der Strahlteiler 19 stellt eine wellenlängenselektive Trennung der in den Detektor 12 fallenden reflektierten Messstrahlung 14 von dem ebenso einfallenden Fluoreszenzlicht 15 bereit. Die reflektierte Messstrahlung 14 wird mittels des Strahlteilers 19 auf den Sensor 17b gelenkt. Das Fluoreszenzlicht 15 kann (zumindest zu wesentlichen Teilen) durch den Strahlteiler 19 transmittieren und mit dem Sensor 17a (als Bild) erfasst werden. Alternativ ist denkbar, dass der Strahlteiler für eine Durchlässigkeit für Licht nur im Wellenlängenbereich der Messstrahlung ausgelegt ist.

Mit dieser Anordnung ist sowohl eine Messung basierend auf emittiertem Fluoreszenzlicht 15 als auch eine Messung basierend auf reflektiertem Messlicht 14 durchführbar. Beide Messoptionen können getrennt, z.B. zeitlich abwechselnd, oder in Kombination, z.B. gleichzeitig, betrieben werden.

Figur 6 zeigt eine weitere Ausführungsform eines erfindungsgemässen Messgeräts 1 zur Vermessung eines zumindest teilweise transparenten oder spiegelnden Objekts 2. Die Ausführungsform unterscheidet sich von derjenigen der Figur 5 bezüglich des Aufbaus des Detektors 12.

Der Detektor 12 weist hierbei einen einzelnen Sensor 17 und einen Strahlteiler 19 auf. Die Signale (Fluoreszenz 15 und Reflexion 14) werden mittels des Strahlteilers 19 getrennt. Die jeweiligen getrennten Signale werden durch Umlenkelemente (z.B. Spiegel) auf den einzelnen Sensor 17, jedoch auf unterschiedliche Erfassungsbereiche des Sensors 17 gelenkt. So kann mit dem einen Sensor 17 sowohl die Fluoreszenzstrahlung 15 als auch reflektierte Strahlung 14 bildhaft erfasst werden.

Mit dem einen Sensor 17 kann aufgrund der räumlichen getrennten Signalerfassung zu jedem Signal ein Bild, d.h. ein Verlauf der Strahlreflexion bzw. der Strahlemission am Objekt, erfasst werden. Anhand des Linienverlaufs im Bild kann dann punktuell die Topografie des Objekts 2 bezüglich dieser Linie berechnet werden.

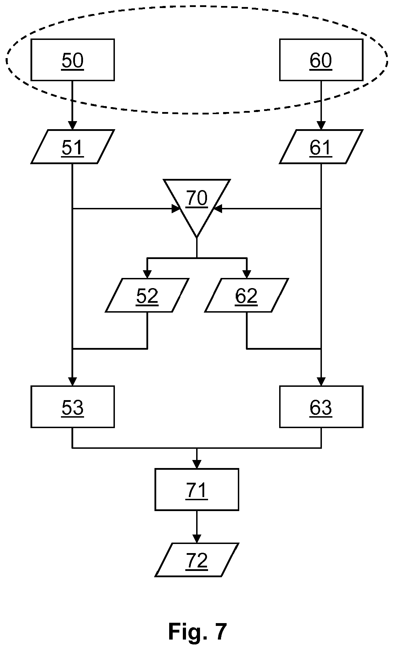

Figur 7 zeigt eine Ausführungsform einer erfindungsgemässen Messstrategie mit einem erfindungsgemässen hybriden Triangulationsscanner, insbesondere nach einem Aufbau gemäss einer der Figuren 1 bis 6.

Als hybrider Triangulationsscanner wird ein Messgerät verstanden, das sowohl zur Emission von Messstrahlung und Detektion von reflektierter Messstrahlung als auch zur Emission von fluoreszenzanregender Strahlung (diese kann identisch mit der Messstrahlung sein, insbesondere hinsichtlich der Wellenlänge) und Detektion von Fluoreszenzlicht ausgebildet ist. Sowohl durch die Detektion der reflektierten Messstrahlung als auch durch die Detektion des Fluoreszenzlichts können jeweilige Entfernungsmessdaten erzeugt werden, d.h. es kann z.B. ein Abstand zu einem Objekt bestimmt werden.

Die Messstrahlung kann jeweils in Form einer Linie emittiert werden. Somit können Messdaten in Bezug zur Gesamtheit der Linie abgeleitet werden. Aus der Form (Verlauf) und der Lage der Linie in einem sensorseitig erfassten Bild lassen sich aufgrund der bekannten relativen Positionierung von Strahlquelle und Detektor und aufgrund einer vorangehenden Kalibrierung des Sensors Entfernungen berechnen.

Die Linie kann relativ zum Objekt über dessen Oberfläche bewegt werden, d.h. das Objekt kann sich relativ zum Scanner bewegen, der Scanner kann relativ zum Objekt bewegt werden oder der Scanner weist eine Ablenkvorrichtung auf, die eine Bewegung der Linien ermöglicht. Hierdurch kann die Objektoberfläche scannend erfasst werden.

Zur Erfassung einer Objektoberfläche wird einerseits eine Triangulationsmessung mittels Reflexion von Messstrahlung 50 durchgeführt, wobei entsprechende Reflexionsbilddaten 51 generiert werden.

Andererseits wird zur Erfassung der Objektoberfläche eine (weitere) Triangulationsmessung mittels Induktion von Fluoreszenz 60 und Erfassung des dabei entstehenden Lichts durchgeführt, wobei entsprechende Fluoreszenzbilddaten 61 generiert werden.

Diese beiden Rohdatensätze (Reflexionsbilddaten 51, Fluoreszenzbilddaten 61) werden gemeinsam verarbeitet und anhand der gesamthaften Verarbeitung wird eine (virtuelle) Segmentierung 70 der Objektoberfläche in reflektierende und fluoreszierende Bereiche durchgeführt, insbesondere automatisch unter Verwendung eines entsprechend implementierten Algorithmus. Hierzu kann z.B. eine Mittelung von Signalintensitäten durchgeführt werden.

Es können entsprechende Masken 52 und 62 für die Oberflächenbereiche mit jeweiligem Bezug zu einer der Messmethoden abgeleitet werden. Zusammen mit den Rohdatensätzen kann dann sowohl eine Reflexionspunktwolke 53 (für einen diffus reflektierenden Oberflächenbereich) als auch eine Fluoreszenzpunktwolke 63 (für einen transparenten oder spiegelnden Oberflächenbereich) erzeugt werden.

In einem nachgeordneten Kombinationsschritt 71 können die Punktwolken 53 und 63 zu einer Gesamtpunktwolke 72 fusioniert werden. Hierdurch wird eine Punktwolke 72 erhalten, die sowohl diffus reflektierende Teile der Objektoberfläche als auch transparente oder spiegelnde Teile der Oberfläche repräsentiert, ein betreffendes Objekt also gesamthaft zu repräsentieren vermag.

Generell können Reflexionsmessdaten verkörpert sein durch die Reflexionsbilddaten 51 und/oder die Reflexionspunktwolke 53. Fluoreszenzsmessdaten können entsprechend durch die Fluoreszenzbilddaten 61 und/oder die Fluoreszenzpunktwolke 63 verkörpert sein.

Es versteht sich, dass diese dargestellten Figuren nur mögliche Ausführungsbeispiele schematisch darstellen. Die verschiedenen Ansätze können erfindungsgemäss ebenso miteinander sowie mit Methoden der Triangulationsmessung oder der Fluoreszenzmessung des Stands der Technik kombiniert werden.

## Patentansprüche

1. Messgerät (1) für die Vermessung eines Objekts (2), wobei das Messgerät (1) eine Entfernungsmesseinrichtung (10) aufweist mit
• einer zur Erzeugung einer Messstrahlung (13,13a,13b) mit einem definierten Wellenlängenspektrum eingerichteten Strahlemissionseinheit (11) und
• einem zur Erfassung der an der Objektoberfläche, insbesondere diffus, reflektierten Messstrahlung (14,14a,14b) eingerichteten Detektor (12) mit mindestens einem ersten Sensor (17,17a,17b),
wobei die Entfernungsmesseinrichtung (10) zur Erzeugung von ersten und zweiten Entfernungsmessdaten und von Reflexionsmessdaten als die ersten Entfernungsmessdaten mittels Emission der Messstrahlung (13,13a,13b) und Erfassung der reflektierten Messstrahlung (14,14a,14b) nach dem Prinzip der Triangulation ausgebildet ist,
**dadurch gekennzeichnet, dass**
• die Messstrahlung (13,13a,13b) mit einem derartigen Wellenlängenspektrum erzeugbar ist, dass durch eine Wechselwirkung der Messstrahlung (13,13a,13b) mit dem Objektmaterial eine Fluoreszenz anregbar und Fluoreszenzlicht (15) emittierbar ist, wobei ein Spektrum des Fluoreszenzlichts und das Wellenlängenspektrum der Messstrahlung unterschiedlich sind,
• der Detektor (12) zur Erfassung des Fluoreszenzlichts ausgebildet ist,
• die Entfernungsmesseinrichtung (10) zur Erzeugung von Fluoreszenzmessdaten als die zweiten Entfernungsmessdaten basierend auf der Erfassung des Fluoreszenzlichts (15) nach dem Prinzip der Triangulation ausgebildet ist, und
• das Messgerät (1) eine Steuerungs- und Verarbeitungseinheit aufweist, wobei die Steuerungs- und Verarbeitungseinheit eine derart konfigurierte Datenfusionsfunktionalität aufweist, dass bei deren Ausführung
□ die Erfassung der Messstrahlung und des Fluoreszenzlichts fortlaufend überwacht wird,
□ fortlaufend eine jeweilige Intensitätsinformation für die jeweilige Erfassung der Messstrahlung und des Fluoreszenzlichts abgeleitet wird, und
□ eine die Objektoberfläche repräsentierende Punktwolke durch selektives Verarbeiten der Reflexionsmessdaten und der Fluoreszenzmessdaten basierend auf der Intensitätsinformation erzeugt wird.

2. Messgerät (1) nach Anspruch 1,
**dadurch gekennzeichnet, dass**
eine Mittenwellenlänge des Wellenlängenspektrums aus einem Bereich zwischen 250 nm und 500 nm gewählt ist, insbesondere 405 nm oder 450 nm beträgt.

3. Messgerät (1) nach Anspruch 1 oder 2,
**dadurch gekennzeichnet, dass**
der Detektor (12) eine erste optische Filterkomponente (16) aufweist und die erste optische Filterkomponente (16) in Zusammenwirkung mit dem ersten Sensor eine wellenlängenabhängige Separation von reflektierter Messstrahlung und Fluoreszenzlicht bereitstellt, insbesondere wobei die erste optische Filterkomponente (16) als räumlich verteilter Multi-Farbfilter, insbesondere RGB-Filter, ausgebildet ist.

4. Messgerät (1) nach einem der Ansprüche 1 bis 3,
**dadurch gekennzeichnet, dass**
der Detektor (12) eine zweite optische Filterkomponente aufweist und die zweite optische Filterkomponente als zweiteiliger Wechselfilter mit einem ersten und einem zweiten Filterbereich (16a,16b) ausgebildet ist, wobei
• der erste Filterbereich (16a) eine im Wesentlichen exklusive Durchlässigkeit in Bezug zu dem Wellenlängenspektrum, insbesondere für die Mittenwellenlänge des Wellenlängenspektrums, bereitstellt,
• der zweite Filterbereich (16b) eine Durchlässigkeit bezüglich eines Spektrum des Fluoreszenzlichts bereitstellt und
• der erste und der zweite Filterbereich (16a,16b) abwechselnd, insbesondere sequentiell, in einem Sichtfeld des ersten Sensors (17) positionierbar sind.

5. Messgerät (1) nach einem der Ansprüche 1 bis 4,
**dadurch gekennzeichnet, dass**
die Strahlemissionseinheit eine erste und eine zweite Strahlquelle (11a,11b) aufweist und die Messstrahlung (13) als eine Komposition, insbesondere Überlagerung, der mit der ersten Strahlquelle (11a) erzeugbaren Messstrahlung (13a) mit dem definierten Wellenlängenspektrum und einer mit der zweiten Strahlquelle (11b) erzeugbaren weiteren Messstrahlung (13b) mit einem von dem definierten Wellenlängenspektrum unterschiedlichen weiteren Wellenlängenspektrum erzeugbar ist,
insbesondere wobei
• die Entfernungsmesseinrichtung (10) zur derartigen Ansteuerung der ersten und der zweiten Strahlquelle (11a,11b) ausgebildet ist, dass die Messstrahlung mit dem definierten Wellenlängenspektrum (13a) und die Messstrahlung mit dem weiteren Wellenlängenspektrum (13b) sequentiell abwechselnd in bestimmten Intervallen emittierbar sind, und
• die Entfernungsmesseinrichtung (10) zur derartigen Ansteuerung des Detektors (12) ausgebildet ist, dass eine erste Erfassung und eine zweite Erfassung sequentiell synchronisiert mit der Ansteuerung der ersten und der zweiten Strahlquelle durchführbar sind.

6. Messgerät (1) nach einem der Ansprüche 1 bis 5,
**dadurch gekennzeichnet, dass**
der Detektor (12) einen zweiten Sensor (17b) aufweist und derart eingerichtet ist, dass die reflektierte Messstrahlung (14,14a,14b) mit dem ersten Sensor (17,17a) und das Fluoreszenzlicht (15) mit dem zweiten Sensor (17b) erfassbar ist, insbesondere wobei dem ersten und dem zweiten Sensor (17,17a,17b) jeweils eine Filtereinheit (16a,16b) zugeordnet sind und die jeweilige Filtereinheit (16a,16b) im Wesentlichen ausschliesslich bezüglich der reflektierten Messstrahlung bzw. des Fluoreszenzlichts durchlässig ist.

7. Messgerät (1) nach einem der Ansprüche 1 bis 6,
**dadurch gekennzeichnet, dass**
der Detektor (12) einen Strahlteiler (19) aufweist und der Strahlteiler (19) insbesondere dichroitisch zur wellenlängenabhängigen Separation der reflektierten Messstrahlung (14,14a,14b) von dem Fluoreszenzlicht (15) ausgebildet ist.

8. Messgerät (1) nach einem der Ansprüche 1 bis 7,
**dadurch gekennzeichnet, dass**
der mindestens eine erste Sensor (17,17a) einen ersten und einen zweiten, insbesondere räumlich getrennten, Erfassungsbereich aufweist und der Detektor (12) derart eingerichtet ist, dass die reflektierte Messstrahlung (14,14a,14b) durch Wechselwirkung mit dem ersten Erfassungsbereich und das Fluoreszenzlicht (15) durch Wechselwirkung mit dem zweiten Erfassungsbereich erfassbar ist.

9. Messgerät (1) nach einem der Ansprüche 1 bis 8,
**dadurch gekennzeichnet, dass**
die Steuerungs- und Verarbeitungseinheit zur Ausführung eines Verfahrens nach einem der Ansprüche 12 bis 14 eingerichtet ist.

10. Messgerät (1) nach einem der Ansprüche 1 bis 9,
**dadurch gekennzeichnet, dass**
• diejenigen Entfernungsmessdaten für einen jeweiligen Objektpunkt verarbeitet werden, für welche eine grössere Intensität abgeleitet ist.

11. Messgerät (1) nach einem der Ansprüche 1 bis 10,
**dadurch gekennzeichnet, dass**
die Steuerungs- und Verarbeitungseinheit eine derart konfigurierte Umschaltfunktionalität aufweist, dass bei deren Ausführung
• die Messstrahlung oder das Fluoreszenzlicht fortlaufend erfasst wird,
• entsprechende Reflexionsmessdaten bzw. Fluoreszenzmessdaten erzeugt werden,
• die Erfassung der Messstrahlung bzw. des Fluoreszenzlichts fortlaufend bezüglich einer Signalintensität überwacht wird,
• die Signalintensität fortlaufend mit einem definierten Schwellwert verglichen wird und
• ein Umschalten zwischen der Erfassung der Messstrahlung und der Erfassung des Fluoreszenzlichts in Abhängigkeit des Vergleichs erfolgt.

12. Hybrides Messverfahren zur Vermessung eines ein bezüglich eines bekannten Wellenlängenbereichs fluoreszierendes Material aufweisenden Objekts (2), mit
• Erzeugen und Emittieren einer Messstrahlung (13,13a,13b) mit einem definierten Wellenlängenspektrum,
• Beleuchten eines Objektbereichs mit der Messstrahlung (13,13a,13b),
• Erfassen der an der Objektoberfläche, insbesondere diffus, reflektierten Messstrahlung (14,14a,14b),
• Erzeugen von Reflexionsmessdaten als erste Entfernungsmessdaten basierend auf dem Erfassen der reflektierten Messstrahlung (14,14a,14b) nach dem Prinzip der Triangulation,
**dadurch gekennzeichnet, dass**
• die Messstrahlung (13,13a,13b) mit einem derartigen Wellenlängenspektrum erzeugt wird, dass im Rahmen des Beleuchtens durch eine Wechselwirkung der Messstrahlung (13,13a,13b) mit dem Objektmaterial eine Fluoreszenz angeregt und objektseitig Fluoreszenzlicht (15) emittiert wird,
• das Fluoreszenzlicht (15) erfasst wird,
• Fluoreszenzmessdaten als zweite Entfernungsmessdaten basierend auf der Erfassung des Fluoreszenzlichts (15) nach dem Prinzip der Triangulation erzeugt werden,
• die Erfassung der Messstrahlung und des Fluoreszenzlichts fortlaufend überwacht wird,
• fortlaufend eine jeweilige Intensitätsinformation für die jeweilige Erfassung der Messstrahlung und des Fluoreszenzlichts abgeleitet wird, und
• eine die Objektoberfläche repräsentierende Punktwolke durch selektives Verarbeiten der Reflexionsmessdaten und der Fluoreszenzmessdaten basierend auf der Intensitätsinformation erzeugt wird.

13. Messverfahren nach Anspruch 12,
**dadurch gekennzeichnet, dass**
• basierend auf den Reflexionsmessdaten (51) eine Reflexionspunktwolke (53) erzeugt wird,
• basierend auf den Fluoreszenzmessdaten (61) eine Fluoreszenzpunktwolke (63) erzeugt wird und
• eine Repräsentation der Objektoberfläche durch eine Kombination der Reflexionspunktwolke und der Fluoreszenzpunktwolke erzeugt wird.

14. Messverfahren nach Anspruch 12 oder 13,
**dadurch gekennzeichnet, dass**
• die Reflexionsmessdaten (51) und die Fluoreszenzmessdaten (61) hinsichtlich deren jeweiliger Qualität, insbesondere Dichte, bezüglich der Erfassung des Objektbereichs ortsabhängig analysiert werden,
• eine Segmentierung (70) des Objektbereichs basierend auf der Analyse erfolgt,
• eine Kombination von zumindest einem Teil der Reflexionsmessdaten (51) und von zumindest einem Teil der Fluoreszenzmessdaten (61) basierend auf der Segmentierung erfolgt.

15. Computerprogrammprodukt, das auf einem maschinenlesbaren Träger gespeichert ist oder verkörpert ist durch eine elektromagnetische Welle, zur Steuerung bzw. Ausführung der Schritte des Messverfahrens nach einem der Ansprüche 12 bis 14, wenn das Computerprogrammprodukt auf einer Steuerungs- und Verarbeitungseinheit eines Messgeräts (1) nach einem der Ansprüche 1 bis 11 ausgeführt wird.

## Claims

1. Measuring device (1) for measuring an object (2),
wherein the measuring device (1) comprises a distance measuring unit (10) having
• a beam emission unit (11) configured for generating a measurement radiation (13, 13a, 13b) having a defined wavelength spectrum and
• a detector (12) configured for detecting the measurement radiation (14, 14a, 14b) reflected, in particular diffusely reflected, on the object surface, having at least one first sensor (17, 17a, 17b),
wherein the distance measuring unit (10) is designed for generating first and second distance measured data and reflection measured data as the first distance measured data by means of emission of the measurement radiation (13, 13a, 13b) and detection of the reflected measurement radiation (14, 14a, 14b) according to the principle of triangulation,
**characterized in that**
• the measurement radiation (13, 13a, 13b) can be generated having a wavelength spectrum such that a fluorescence can be excited by an interaction of the measurement radiation (13, 13a, 13b) with the object material and fluorescent light (15) can be emitted, wherein a spectrum of the fluorescent light and the wavelength spectrum of the measurement radiation are different,
• the detector (12) is designed for detecting the fluorescent light,
• the distance measuring unit (10) is designed for generating fluorescence measured data as second distance measured data based on the detection of the fluorescent light (15) according to the principle of triangulation, and
• the measuring device (1) comprises a control and processing unit, wherein the control and processing unit has a data fusion functionality configured such that upon its execution
□ the detection of the measurement radiation and the fluorescent light is continuously monitored,
□ a respective item of intensity information for the respective detection of the measurement radiation and the fluorescent light is continuously derived, and
□ a point cloud representing the object surface is generated by selective processing of the reflection measured data and the fluorescence measured data based on the intensity information.

2. Measuring device (1) according to Claim 1,
**characterized in that**
a center wavelength of the wavelength spectrum is selected from a range between 250 nm and 500 nm, in particular is 405 nm or 450 nm.

3. Measuring device (1) according to Claim 1 or 2,
**characterized in that**
the detector (12) comprises a first optical filter component (16) and the first optical filter component (16), in cooperation with the first sensor, provides a wavelength-dependent separation of reflected measurement radiation and fluorescent light, in particular wherein the first optical filter component (16) is designed as a spatially distributed multicolor filter, in particular an RGB filter.

4. Measuring device (1) according to any one of Claims 1 to 3,
**characterized in that**
the detector (12) comprises a second optical filter component and the second optical filter component is designed as a two-part alternating filter having a first and a second filter region (16a, 16b), wherein
• the first filter region (16a) provides a substantially exclusive transmissivity with respect to the wavelength spectrum, in particular for the center wavelength of the wavelength spectrum,
• the second filter region (16b) provides a transmissivity with respect to a spectrum of the fluorescent light, and
• the first and the second filter regions (16a, 16b) are positionable alternately, in particular sequentially, in a field of view of the first sensor (17).

5. Measuring device (1) according to any one of Claims 1 to 4,
**characterized in that**
the beam emission unit comprises a first and a second beam source (11a, 11b) and the measurement radiation (13) can be generated as a composition, in particular overlay, of the measurement radiation (13a) that can be generated using the first beam source (11a) having the defined wavelength spectrum and a further measurement radiation (13b) that can be generated using the second beam source (11b) having a further wavelength spectrum different from the defined wavelength spectrum,
in particular wherein
• the distance measuring unit (10) is designed for the activation of the first and the second beam source (11a, 11b) in such a way that the measurement radiation having the defined wavelength spectrum (13a) and the measurement radiation having the further wavelength spectrum (13b) can be sequentially emitted alternately at specific intervals, and
• the distance measuring unit (10) is designed for the activation of the detector (12) such that a first detection and a second detection can be carried out sequentially synchronized with the activation of the first and the second beam source.

6. Measuring device (1) according to any one of Claims 1 to 5,
**characterized in that**
the detector (12) comprises a second sensor (17b) and is configured in such a way that the reflected measurement radiation (14, 14a, 14b) is detectable using the first sensor (17, 17a) and the fluorescent light (15) is detectable using the second sensor (17b), in particular wherein one filter unit (16a, 16b) is assigned to each of the first and the second sensor (17, 17a, 17b) and the respective filter unit (16a, 16b) is essentially exclusively transmissive with respect to the reflected measurement radiation or the fluorescent light, respectively.

7. Measuring device (1) according to any one of Claims 1 to 6,
**characterized in that**
the detector (12) comprises a beam splitter (19) and the beam splitter (19) is designed in particular as dichroic for the wavelength-dependent separation of the reflected measurement radiation (14, 14a, 14b) from the fluorescent light (15).

8. Measuring device (1) according to any one of Claims 1 to 7,
**characterized in that**
the at least one first sensor (17, 17a) comprises a first and a second, in particular spatially separated, detection region and the detector (12) is configured in such a way that the reflected measurement radiation (14, 14a, 14b) is detectable by interaction with the first detection region and the fluorescent light (15) is detectable by interaction with the second detection region.

9. Measuring device (1) according to any one of Claims 1 to 8,
**characterized in that**
the control and processing unit is configured to execute a method according to any one of Claims 12 to 14.

10. Measuring device (1) according to any one of Claims 1 to 9,
**characterized in that**
the distance measured data are processed for a respective object point for which a greater intensity is derived.

11. Measuring device (1) according to any one of Claims 1 to 10,
**characterized in that**
the control and processing unit comprises a switchover functionality configured such that upon its execution
• the measurement radiation or the fluorescent light is continuously detected,
• corresponding reflection measured data or fluorescence measured data, respectively, are generated,
• the detection of the measurement radiation or the fluorescent light is continuously monitored with respect to a signal intensity,
• the signal intensity is continuously compared to a defined threshold value, and
• a switchover takes place between the detection of the measurement radiation and the detection of the fluorescent light in dependence on the comparison.

12. Hybrid measuring method for measuring an object (2) comprising a material which fluoresces with respect to a known wavelength range, comprising
• generating and emitting a measurement radiation (13, 13a, 13b) having a defined wavelength spectrum,
• illuminating of an object region using the measurement radiation (13, 13a, 13b),
• detecting the measurement radiation (14, 14a, 14b) reflected on the surface, in particular diffusely,
• generating reflection measured data as first distance measured data based on the detection of the reflected measurement radiation (14, 14a, 14b) according to the principle of triangulation,
**characterized in that**
• the measurement radiation (13, 13a, 13b) is generated having a wavelength spectrum such that in the scope of the illumination, a fluorescence is excited due to an interaction of the measurement radiation (13, 13a, 13b) with the object material and fluorescent light (15) is emitted at the object,
• the fluorescent light (15) is detected,
• fluorescent measured data are generated as second distance measured data based on the detection of the fluorescent light (15) according to the principle of triangulation,
• the detection of the measurement radiation and the fluorescent light is continuously monitored,
• a respective item of intensity information for the respective detection of the measurement radiation and the fluorescent light is continuously derived, and
• a point cloud representing the object surface is generated by selective processing of the reflection measured data and the fluorescence measured data based on the intensity information.

13. Measuring method according to Claim 12,
**characterized in that**
• a reflection point cloud (53) is generated based on the reflection measured data (51),
• a fluorescence point cloud (63) is generated based on the fluorescence measured data (61), and
• a representation of the object surface is generated by a combination of the reflection point cloud and the fluorescence point cloud.

14. Measuring method according to Claim 12 or 13,
**characterized in that**
• the reflection measured data (51) and the fluorescence measured data (61) are analyzed depending on the location with respect to the respective quality thereof, in particular density, in regard to the detection of the object region,
• a segmentation (70) of the object region is carried out based on the analysis,
• a combination of at least a part of the reflection measured data (51) and of at least a part of the fluorescence measured data (61) is carried out based on the segmentation.

15. Computer program product, which is stored on a machine-readable carrier or is embodied by an electromagnetic wave, for controlling and/or executing the steps of the measuring method according to any one of Claims 12 to 14, when the computer program product is executed on a control and processing unit of a measuring device (1) according to any one of Claims 1 to 11.

## Revendications

1. Appareil de mesure (1) pour la mesure d'un objet (2),
l'appareil de mesure (1) présentant un dispositif de mesure de distance (10) avec
• une unité d'émission de faisceau (11) conçue pour générer un rayonnement de mesure (13, 13a, 13b) avec un spectre de longueurs d'onde défini et
• un détecteur (12) doté d'au moins un premier capteur (17, 17a, 17b) et conçu pour détecter le rayonnement de mesure (14, 14a, 14b) réfléchi, en particulier de manière diffuse, sur la surface de l'objet,
le dispositif de mesure de distance (10) étant conçu pour générer des premières et deuxièmes données de mesure de distance et des données de mesure de réflexion en tant que premières données de mesure de distance au moyen de l'émission du rayonnement de mesure (13, 13a, 13b) et pour détecter le rayonnement de mesure réfléchi (14, 14a, 14b) selon le principe de la triangulation,
**caractérisé en ce que**
• le rayonnement de mesure (13, 13a, 13b) peut être généré avec un spectre de longueurs d'onde tel que, par une interaction du rayonnement de mesure (13, 13a, 13b) avec le matériau de l'objet, une fluorescence peut être excitée et une lumière fluorescente (15) peut être émise, un spectre de la lumière fluorescente et le spectre de longueurs d'onde du rayonnement de mesure étant différents,
• le détecteur (12) est conçu pour détecter la lumière fluorescente,
• le dispositif de mesure de distance (10) est conçu pour générer des données de mesure de fluorescence en tant que deuxièmes données de mesure de distance sur la base de la détection de la lumière fluorescente (15) selon le principe de la triangulation, et
• l'appareil de mesure (1) présente une unité de commande et de traitement, l'unité de commande et de traitement présentant une fonctionnalité de fusion de données configurée de telle sorte que, lors de son exécution :
□ la détection du rayonnement de mesure et de la lumière fluorescente est surveillée en permanence,
□ une information d'intensité respective est déduite en continu pour la détection respective du rayonnement de mesure et de la lumière fluorescente, et
□ un nuage de points représentant la surface de l'objet est généré par traitement sélectif des données de mesure de réflexion et des données de mesure de fluorescence sur la base de l'information d'intensité.

2. Appareil de mesure (1) selon la revendication 1,
**caractérisé en ce que**
une longueur d'onde centrale du spectre de longueurs d'onde est choisie dans une plage comprise entre 250 nm et 500 nm, en particulier est de 405 nm ou 450 nm.

3. Appareil de mesure (1) selon la revendication 1 ou 2,
**caractérisé en ce que**
le détecteur (12) présente un premier composant de filtrage optique (16) et le premier composant de filtrage optique (16) fournit, en coopération avec le premier capteur, une séparation en fonction de la longueur d'onde du rayonnement de mesure réfléchi et de la lumière fluorescente, en particulier le premier composant de filtrage optique (16) étant réalisé sous la forme d'un filtre multicolore à répartition spatiale, en particulier un filtre RGB.

4. Appareil de mesure (1) selon l'une des revendications 1 à 3,
**caractérisé en ce que**
le détecteur (12) présente un deuxième composant de filtrage optique et le deuxième composant de filtrage optique est réalisé sous la forme d'un filtre interchangeable en deux parties avec une première et une deuxième zone de filtrage (16a, 16b), dans lequel
• la première zone de filtrage (16a) assure une transmission sensiblement exclusive par rapport au spectre de longueurs d'onde, en particulier pour la longueur d'onde centrale du spectre de longueurs d'onde,
• la deuxième zone de filtrage (16b) assure une transmission par rapport à un spectre de la lumière fluorescente, et
• la première et la deuxième zone de filtrage (16a, 16b) peuvent être positionnées en alternance, en particulier séquentiellement, dans un champ de vision du premier capteur (17).

5. Appareil de mesure (1) selon l'une des revendications 1 à 4,
**caractérisé en ce que**
l'unité d'émission de faisceau présente une première et une deuxième source de faisceau (11a, 11b) et le rayonnement de mesure (13) peut être généré sous la forme d'une composition, en particulier d'une superposition, du rayonnement de mesure (13a) pouvant être généré par la première source de faisceau (11a) avec le spectre de longueurs d'onde défini et d'un autre rayonnement de mesure (13b) pouvant être généré par la deuxième source de faisceau (11b) avec un autre spectre de longueurs d'onde différent du spectre de longueurs d'onde défini, en particulier dans lequel
• le dispositif de mesure de distance (10) est conçu pour commander la première et la deuxième source de rayonnement (11a, 11b) de telle sorte que le rayonnement de mesure avec le spectre de longueurs d'onde défini (13a) et le rayonnement de mesure avec l'autre spectre de longueurs d'onde (13b) peuvent être émis séquentiellement en alternance à des intervalles définis, et
• le dispositif de mesure de distance (10) est conçu pour commander le détecteur (12) de telle sorte qu'une première détection et une deuxième détection peuvent être effectuées séquentiellement de manière synchronisée avec la commande de la première et de la deuxième source de rayonnement.

6. Appareil de mesure (1) selon l'une des revendications 1 à 5,
**caractérisé en ce que**
le détecteur (12) présente un deuxième capteur (17b) et est conçu de telle sorte que le rayonnement de mesure réfléchi (14, 14a, 14b) peut être détecté par le premier capteur (17, 17a) et la lumière fluorescente (15) par le deuxième capteur (17b), en particulier dans lequel une unité de filtrage (16a, 16b) est associée respectivement au premier et au deuxième capteur (17, 17a, 17b) et l'unité de filtrage respective (16a, 16b) assure une transmission sensiblement exclusive par rapport au rayonnement de mesure réfléchi ou la lumière fluorescente.

7. Appareil de mesure (1) selon l'une des revendications 1 à 6,
**caractérisé en ce que**
le détecteur (12) présente un diviseur de faisceau (19) et le diviseur de faisceau (19) est conçu en particulier de manière dichroïque pour séparer en fonction de la longueur d'onde le rayonnement de mesure réfléchi (14, 14a, 14b) de la lumière fluorescente (15).

8. Appareil de mesure (1) selon l'une des revendications 1 à 7,
**caractérisé en ce que**
ledit au moins un premier capteur (17, 17a) présente une première et une deuxième zone de détection, en particulier séparées spatialement, et le détecteur (12) est conçu de telle sorte que le rayonnement de mesure réfléchi (14, 14a, 14b) peut être détecté par interaction avec la première zone de détection et la lumière fluorescente (15) par interaction avec la deuxième zone de détection.

9. Appareil de mesure (1) selon l'une des revendications 1 à 8,
**caractérisé en ce que**
l'unité de commande et de traitement est conçue pour mettre en œuvre un procédé selon l'une des revendications 12 à 14.

10. Appareil de mesure (1) selon l'une des revendications 1 à 9,
**caractérisé en ce que**
• les données de mesure de distance qui sont traitées pour un point d'objet respectif sont celles pour lesquelles une intensité plus grande est déduite.

11. Appareil de mesure (1) selon l'une des revendications 1 à 10,
**caractérisé en ce que**
l'unité de commande et de traitement présente une fonctionnalité de commutation configurée de telle sorte que, lors de son exécution :
• le rayonnement de mesure ou la lumière fluorescente est détecté(e) en continu,
• des données de mesure de réflexion ou des données de mesure de fluorescence correspondantes sont générées,
• la détection du rayonnement de mesure ou de la lumière fluorescente est surveillée en continu en ce qui concerne une intensité de signal,
• l'intensité de signal est comparée en continu à une valeur seuil définie et
• une commutation entre la détection du rayonnement de mesure et la détection de la lumière fluorescente a lieu en fonction de la comparaison.

12. Procédé de mesure hybride pour la mesure d'un objet (2) présentant un matériau fluorescent par rapport à une plage de longueurs d'onde connue, comprenant :
• la génération et l'émission d'un rayonnement de mesure (13, 13a, 13b) avec un spectre de longueurs d'onde défini,
• l'éclairage d'une zone de l'objet avec le rayonnement de mesure (13, 13a, 13b),
• la détection du rayonnement de mesure (14, 14a, 14b) réfléchi, en particulier de manière diffuse, sur la surface de l'objet,
• la génération de données de mesure de réflexion en tant que premières données de mesure de distance sur la base de la détection du rayonnement de mesure réfléchi (14, 14a, 14b) selon le principe de la triangulation,
**caractérisé en ce que**
• le rayonnement de mesure (13, 13a, 13b) est généré avec un spectre de longueurs d'onde tel que, dans le cadre de l'éclairage, une fluorescence est excitée par une interaction du rayonnement de mesure (13, 13a, 13b) avec le matériau de l'objet et une lumière fluorescente (15) est émise du côté de l'objet,
• la lumière fluorescente (15) est détectée,
• des données de mesure de fluorescence sont générées en tant que deuxièmes données de mesure de distance sur la base de la détection de la lumière fluorescente (15) selon le principe de la triangulation,
• la détection du rayonnement de mesure et de la lumière fluorescente est surveillée en permanence,
• une information d'intensité respective est déduite en continu pour la détection respective du rayonnement de mesure et de la lumière fluorescente, et
• un nuage de points représentant la surface de l'objet est généré par traitement sélectif des données de mesure de réflexion et des données de mesure de fluorescence sur la base de l'information d'intensité.

13. Procédé de mesure selon la revendication 12,
**caractérisé en ce que**
• un nuage de points de réflexion (53) est généré sur la base des données de mesure de réflexion (51),
• un nuage de points de fluorescence (63) est généré sur la base des données de mesure de fluorescence (61) et
• une représentation de la surface de l'objet est générée par une combinaison du nuage de points de réflexion et du nuage de points de fluorescence.

14. Procédé de mesure selon la revendication 12 ou 13,
**caractérisé en ce que**
• les données de mesure de réflexion (51) et les données de mesure de fluorescence (61) sont analysées en fonction de l'emplacement en ce qui concerne leur qualité respective, en particulier leur densité, par rapport à la détection de la zone de l'objet,
• une segmentation (70) de la zone de l'objet est effectuée sur la base de l'analyse,
• une combinaison d'au moins une partie des données de mesure de réflexion (51) et d'au moins une partie des données de mesure de fluorescence (61) est effectuée sur la base de la segmentation.

15. Produit programme d'ordinateur stocké sur un support lisible par machine ou matérialisé par une onde électromagnétique, pour commander ou exécuter les étapes du procédé de mesure selon l'une des revendications 12 à 14 lorsque le produit programme d'ordinateur est exécuté sur une unité de commande et de traitement d'un appareil de mesure (1) selon l'une des revendications 1 à 11.
